Europäisches Patentamt

European Patent Office

Office européen des brevets

(19)

(11) Veröffentlichungsnummer: **0 032 234**
**B1**

(12) # EUROPÄISCHE PATENTSCHRIFT

(45) Veröffentlichungstag der Patentschrift:
17.04.85

(21) Anmeldenummer: 80108151.4

(22) Anmeldetag: 23.12.80

(51) Int. Cl.⁴: **A 47 L 13/20**

(54) **Feuchtwisch-Mop.**

(30) Priorität: 09.01.80 DE 3000615

(43) Veröffentlichungstag der Anmeldung:
22.07.81 Patentblatt 81/29

(45) Bekanntmachung des Hinweises auf die Patenterteilung:
17.04.85 Patentblatt 85/16

(84) Benannte Vertragsstaaten:
AT BE CH DE FR GB IT LI LU NL SE

(56) Entgegenhaltungen:
FR - A - 1 090 299
US - A - 3 761 991
US - A - 3 822 435
US - A - 3 991 432

(73) Patentinhaber: Salmon GmbH & Co. Vermietungs- und Verpachtungs KG, Georg-Feuerstein-Strasse 3, D-6980 Wertheim (DE)

(72) Erfinder: Salmon, Heinz, Georg-Feuerstein 3, D-6980 Wertheim (DE)

(74) Vertreter: Lehn, Werner, Dipl.-Ing. et al, Hoffmann, Eitle & Partner Patentanwälte Arabellastrasse 4 (Sternhaus), D-8000 München 81 (DE)

**Beschreibung**

Die Erfindung bezieht sich auf einen Feuchtwisch-Mop mit einem flächigen Trägergebilde, an dessen Innenseite Aufnahmetaschen für die Handhabe ausgebildet und an dessen Außenseite Wischzotteln befestigt sind.

Bekannte flächige Trägergebilde zur Befestigung der Wischzotteln und zum Festlegen des Mops an einer Handhabe bestehen aus einem Gewebe oder Gewirk (US-A-3 991 932). Durch die US-A-3 822 435 ist es bekannt, ein Trägergebilde der infragestehenden Art aus Nylon oder Baumwolle herzustellen Die FR-A-1 090 299 zeigt die Verwendung von Gewebe aus Kunststoff für solche Trägergebilde. Bei den bekannten Trägergebilden sind die Fäden innerhalb des Gewebes oder Gewirks derart dicht aneinandergelegt, daß das Gewebe die beim Feuchtwischen auftretende Flüssigkeit, beispielsweise Reinigungsflüssigkeit oder Wasser, aufsaugt und durch die dabei wirksam werdenden Kapillarkräfte länger hält, als dies erwünscht ist. Bei der Verwendung von Baumwolle kommt es bei der anhaltenden Feuchtigkeit zu Verrottungserscheinungen. Wenngleich die möglicherweise verwendeten Kunststoffasern nicht durch die Feuchtigkeit verrotten können, so treten durch die Feuchtigkeit Stockflecken auf oder aber die Feuchtigkeit wirkt sich in der Umgebung negativ aus, in der der Mop abgestellt ist. Gegebenenfalls verrottet auch die aus Metall bestehende Handhabe.

Daher besteht die Aufgabe der Erfindung darin, das flächige Trägergebilde des Feuchtwisch-Mops derart auszubilden, daß das Halten von Feuchtigkeit in dem Trägergebilde weitgehend vermieden wird.

Diese Aufgabe wird erfindungsgemäß dadurch gelöst, daß das flächige Trägergebilde aus einer mit einer Vielzahl von nebeneinander angeordneten Löchern versehenen Folie besteht.

Diese Ausbildung des Trägergebildes führt einerseits dazu, daß die anfallende Flüssigkeit, beispielsweise das anfallende Wasser, das Trägergebilde durchdringen kann, ohne darin festgehalten zu werden. Andererseits wird im Zusammenhang damit vermieden, daß von dem Trägergebilde dieses Wasser angesaugt und dort für längere Zeit über die Zeit hinaus gehalten wird, in der ein Feuchtwischen mit dem Mop erfolgt.

Die Folie ist vorteilhaft eine Kunststoffolie.

Zweckmäßig sind die Löcher in die Folie gestanzt.

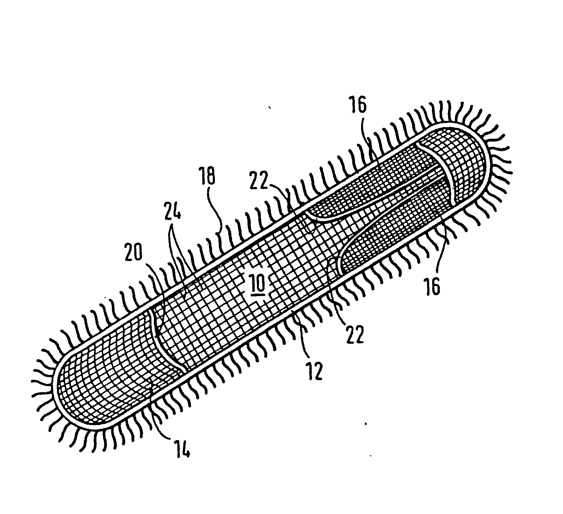

Im folgenden wird die Erfindung anhand eines in der Zeichnung dargestellten Ausführungsbeispiels näher erläutert.

Die einzige Figur der Zeichnung zeigt in perspektivischer Darstellung einen Feuchtwisch-Mop gemäß dem Stand der Technik.

Der Feuchtwisch-Mop besteht aus einem flächigen Trägergebilde 10, welches von einem Saum 12 begrenzt ist. Das Trägergebilde hat eine im wesentlichen rechteckige Form, wobei an einem Ende eine einseitig offene Tasche 14 und am anderen Ende eine zweilaschige Tasche 16 ausgebildet ist. Die Taschen befinden sich an der Innenseite des Trägergebildes 10. Auf der anderen Seite des Trägergebildes 10 sind Wischzotteln 18 vorzugsweise durch Nähen am Trägergebilde 10 befestigt.

Das Trägergebilde 10 besteht einschließlich der Taschen 14 und 16, die ebenfalls von einem Saum 20 bzw. 22 begrenzt sind, aus einem aus Kunststofffäden 24 hergestellten Gewebe. Diese Fäden laufen, wie bei Geweben üblich, parallel zueinander, allerdings in einem derartigen Abstand, daß ein Gitter entsteht. Die Maschengröße dieses Gitters ist so groß, daß einerseits Wasser hindurchdringen kann und andererseits Wasser nicht aufgesaugt und nicht gespeichert wird. Außerdem ist das Gittergewebe leichter als vergleichbares Baumwoll- oder sonstiges Gewebe, bei denen die Fäden dicht aneinanderliegend gewebt sind. Durch die geringere Wasseraufnahme kann das Gerät leichter gehandhabt werden. Durch das geringere Gewicht besteht die Möglichkeit, eine größere Anzahl von Mops pro Zeiteinheit in der Waschmaschine zu waschen.

Erfindungsgemäß ist jedoch das Trägergebilde 10 aus einer Folie, die aus Kunststoff sein kann, herzustellen, die mit einer Vielzahl von Löchern beliebiger Form versehen ist. Diese Löcher können in eine Folie nach deren Herstellung gestanzt werden.

**Patentansprüche**

1. Feuchtwisch-Mop mit einem flächigen Trägergebilde (10), an dessen Innenseite Aufnahmetaschen (14, 16) für die Handhabe ausgebildet und an dessen Außenseite Wischzotteln (18) befestigt sind, dadurch gekennzeichnet, daß das flächige Trägergebilde (10) aus einer mit einer Vielzahl von nebeneinander angeordneten Löchern versehenen Folie besteht.

2. Feuchtwisch-Mop nach Anspruch 1, dadurch gekennzeichnet, daß die Folie eine Kunststoffolie ist.

3. Feuchtwisch-Mop nach Anspruch 1 oder 2, dadurch gekennzeichnet, daß die Löcher in die Folie gestanzt sind.

**Claims**

1. A wet mop, comprising a planar carrier structure (10), on the inner side of which receiving pockets (14, 16) for the handle are constructed and on the outer side of which wiping shags (18) are attached, characterized in that the planar carrier structure (10) consists of a film provided with a plurality of juxtaposed holes.

2. A wet mop according to claim 1, characterized in that the film is a synthetic film.

3. A wet mop according to claim 1 or 2, characterized in that the holes are punched into the film.

## Revendications

1. Tête de balai pour nettoyage humide avec un élément d'appui plan (10) sur la face intérieure duquel sont formées des poches de réception (14, 16) pour le manche et à la face extérieure duquel sont fixées des franges de nettoyage (18), caractérisée en ce que l'élément d'appui plan (10) est constitué par une feuille prévue avec une multitude de trous disposés les uns auprès des autres.

2. Tête de balai pour nettoyage humide selon la revendication 1, caractérisée en ce que la feuille est une feuille en matière plastique.

3. Tête de balai pour nettoyage humide selon la revendication 1 ou 2, caractérisée en ce que les trous sont poinçonnés dans la feuille.